# NOUVEAU FASCICULE DE BREVET EUROPEEN

(11) **EP 1 022 263 B2**
(45) Date de publication et mention de la décision concernant l'opposition: **13.02.2008**
(45) Mention de la délivrance du brevet: 01.10.2003
(21) Numéro de dépôt: 00400113.7
(22) Date de dépôt: 18.01.2000
(51) Int. Cl.: C04B 26/12, C08G 8/10, C08K 7/14, C03C 25/34, C08L 61/06

(54) **Procédé de fabrication d'un produit d'isolation notamment thermique**
Verfahren zur Herstellung von Wärmedämmkörper
Method for manufacturing of a thermal insulation product

(30) Priorité: 19.01.1999 FR 9900510
(43) Date de publication de la demande: 26.07.2000
(73) Titulaire: SAINT-GOBAIN ISOVER, 92400 Courbevoie (FR)
(72) Inventeur: Espiard, Philippe, 60270 Gouvieux (FR); Mahieuxe, Bruno, 60600 Clermont (FR); Tetart, Serge, 60470 Saint-Maximin (FR); Mallier, Jean-Louis, 60290 Rantigny (FR)
(74) Mandataire: Cardin, Elise

(56) Documents cités:
- EP-A- 0 020 102
- EP-A- 0 699 639
- US-A- 2 604 427
- US-A- 3 956 205
- US-A- 5 505 998
- US-A- 5 530 048
- DATABASE WPI Section Ch, Week 199910 Derwent Publications Ltd., London, GB; Class A21, AN 1999-119247 XP002135785 & NZ 331 562 A (BORDEN CHEM INC), 23 décembre 1998 (1998-12-23) -& EP 0 913 413 A 6 mai 1999 (1999-05-06)

## Description

La présente invention se rapporte au domaine des produits d'isolation, thermique ou phonique, à base de laine minérale, notamment de verre ou de roche, et d'un liant organique à base de condensats issus de formaldéhyde. Elle concerne plus particulièrement un procédé de fabrication d'un produit d'isolation susceptible d'émettre une quantité réduite de composés organiques volatils.

La fabrication de produits à base de laine minérale comprend une première étape de fabrication de la laine elle-même, notamment par la technique connue de l'étirage centrifuge dans laquelle la matière minérale fondue est transformée en filaments, et une étape de mise en forme dans laquelle les filaments sont étirés et entraînés vers un organe récepteur par un courant gazeux ayant une vitesse et une température élevées, pour y former une nappe. Pour assurer la cohésion de la nappe, on projette sur la laine lors de son trajet vers l'organe récepteur, une composition, dite d'encollage, qui contient une résine thermodurcissable. La nappe ainsi traitée est ensuite soumise à un traitement thermique en étuve pour polycondenser la résine et obtenir un produit présentant des propriétés désirées, telles que stabilité dimensionnelle, résistance à la traction, reprise d'épaisseur après compression, couleur homogène.

Les compositions d'encollage, qui doivent être pulvérisées sur la laine minérale, se présentent généralement sous la forme d'une composition aqueuse renfermant une résine formo-phénolique et des additifs tels que catalyseur de durcissement de la résine, silane promoteur d'adhérence, huiles minérales anti-poussières,...

L'aptitude à la pulvérisation de ces compositions est conditionnée par la diluabilité de la résine, à savoir le facteur de dilution maximal avec de l'eau désionisée tempérée, c'est-à-dire une eau à température ambiante (de l'ordre de 15 à 25°C, généralement environ 20°C), pour lequel on n'observe pas la formation d'un trouble permanent de la dilution. Avantageusement, une résine destinée à la formulation d'un encollage présente une diluabilité de l'ordre d'au moins 1000 % à 20°C, c'est-à-dire que l'on peut diluer 10 ml de résine avec 10x10 ml d'eau ou plus sans que le mélange ne se trouble.

A cette fin, on a coutume de conduire la réaction de condensation entre le formaldéhyde et le phénol en limitant le degré de condensation des monomères, pour éviter la formation de chaînes longues, peu hydrophiles, qui réduisent la diluabilité. En conséquence, la résine contient une certaine proportion de monomères n'ayant pas réagi, en particulier le formaldéhyde dont la volatilité peut conduire à des émissions non désirables de composés organiques dans l'atmosphère.

C'est pourquoi, une résine formo-phénolique est généralement traitée par de l'urée qui réagit avec le formaldéhyde libre en le piégeant sous forme de produits de condensation non volatils. La présence d'urée dans la résine apporte en outre un avantage économique important du fait de son faible coût, car on peut l'introduire en relativement grande quantité sans affecter sensiblement les qualités d'emploi de la résine, notamment les propriétés mécaniques du produit final, ce qui abaisse notablement le coût total de la résine.

A titre d'illustration, on pourra se référer à EP-A-148 050.

On a néanmoins observé que cette solution n'était pas entièrement satisfaisante en ce qui concerne la pollution atmosphérique, car les produits de condensation urée-formaldéhyde se sont révélés peu stables à la chaleur, de sorte que lors de l'utilisation de la résine pour l'encollage de laine minérale, au cours duquel la résine est soumise à des températures supérieures à 100°C, le produit de condensation urée-formaldéhyde redonne sous l'effet de la chaleur de l'urée, du formaldéhyde et de l'ammoniac qui sont libérés dans l'atmosphère de l'usine.

Cette observation fut à la source de perfectionnements dans lesquels on a cherché soit à modifier chimiquement les condensats urée-formaldéhyde pour les rendre plus stables thermiquement, soit à réduire la proportion de condensats urée-formaldéhyde dans la résine. On pourra se référer par exemple à EP-A-480 778. A chaque fois, de l'urée était néanmoins conservée comme ingrédient de la résine, introduite notamment en simple mélange au moment de la formulation de l'encollage, dans des proportions toujours importantes pour conserver l'avantage économique apporté par ce constituant peu cher.

Des solutions consistant à limiter l'usage d'urée dans des résines phénoliques sont connues.

Dans EP-A-0 913 413, cité au titre de l'article 54(3) CBE, on forme des produits isolants thermiques ou acoustiques avec une résine phénol-formaldéhyde où l'excès de formaldéhyde est piégé par une triazine symétrique telle que la mélamine où l'amméline.

Dans US-A-5 505 998, la résine formo-phénolique pour produits à base de laine de verre ou de roche comprend un piégeur de formaldéhyde constitué par un composé hétérocyclique azoté comprenant un atome d'hydrogène labile sur un groupement aminé.

Enfin, dans US-A-5 530 048, il est proposé une résine phénolique pour des composites renforcés par des fibres, notamment en verre, dont l'excès de formaldéhyde est piégé par un sulfite ou un bisulfite. Les composites obtenus présentent des propriétés mécaniques améliorées.

Bien que l'on parvienne ainsi à réduire les émissions de composés organiques indésirables dans l'atmosphère de l'usine pendant la fabrication du produit isolant, les exigences de respect de l'environnement sont de plus en plus strictes et il est toujours souhaitable d'abaisser encore les niveaux d'émissions, en particulier lorsque le produit isolant est sollicité à haute température, notamment dans le cas d'isolants mis en place dans des appareils thermiques de série, tels que cuisinières

Le but de la présente invention est d'améliorer la fabrication de produits isolants à base de laine minérale pour qu'elle soit le moins possible source d'émission de polluants, tant au cours de la fabrication qu'au cours de l'utilisation du produit par le consommateur final.

C'est en cherchant à atteindre ce but que les présents inventeurs ont mis en évidence une famille de polluants qui n'avait pas encore été considérée: il s'agit des isocyanates. Ils ont observé que la présence de certains composés azotés dans la résine de l'encollage, peut conduire à température élevée à des émissions d'isocyanates. Au premier rang de ces composés azotés, les présents inventeurs ont identifié l'urée.

A cet égard, l'invention est définie selon les revendications 1 à 20.

En effet, il a été observé en particulier que lorsqu'un produit isolant renfermant une résine formo-phénolique est porté à une température élevée, par exemple de l'ordre d'environ 350°C, les émissions d'au moins un isocyanate, à savoir l'isocyanate de méthyle, sont sensiblement proportionnelles au taux d'urée présent dans l'encollage, donc dans le produit isolant.

Par " dérivé d'urée" " on entend ici tout produit susceptible d'être formé par la réaction d'urée avec au moins des composés de la résine. En particulier, un encollage entrant dans la fabrication d'un produit selon l'invention ne renferme pas ou sensiblement pas d'urée ni de produit de condensation urée-formol.

A un degré moindre, l'ammoniaque sous forme moléculaire ou salifiée peut aussi être une source d'isocyanate dans certaines conditions. Dans un mode de réalisation préféré, le produit isolant selon l'invention est sensiblement exempt d'ammoniaque.

Dans la présente description, on entend par " sensiblement exempt " une proportion mineure de composé azoté, telle que l'émission d'isocyanate correspondante ne peut être mesurée de manière significative ou bien reste en deçà d'un niveau acceptable pour l'environnement, ce niveau pouvant varier en fonction de l'application du produit.

Il est difficile d'estimer la teneur en certains constituants organiques du produit isolant tel qu'il sort de la ligne de fabrication, à l'état fini : en effet, si l'on sait exactement de quelle quantité de matière on dispose pour mettre en oeuvre les étapes de fabrication, le rendement du procédé n'est que partiel (perte de matière dans l'atmosphère par évaporation ou transformation..) et peut en outre être soumis à des variations, de sorte que la quantité finale d'un constituant peut varier d'un produit à l'autre au cours d'une même campagne de fabrication. A titre d'illustration, on peut estimer qu'un produit isolant selon l'invention comprend en moyenne avantageusement au plus 0,004%, de préférence 0,002%, en poids d'urée ou de dérivé d'urée, et dans un mode préféré le produit ne comprend pas du tout d'urée ou de dérivé d'urée. De manière préférée, un produit isolant selon l'invention comprend au plus 0,2% en poids d'ammoniaque, avantageusement moins de 0,1%, en particulier moins de 0,01% en poids d'ammoniaque.

De préférence, le taux d'urée est égal à zéro, mais il est toujours possible qu'une quantité minime d'urée soit introduite à titre d'impureté par un autre constituant organique de la composition. Le taux d'urée est donc avantageusement d'au plus 0,1 parties en poids d'urée ou de dérivé d'urée pour 100 parties en poids de résine sèche.

Dans un mode préféré, la composition d'encollage est également sensiblement exempte d'ammoniaque sous forme moléculaire ou salifiée. L'ammoniaque est en général introduit dans une composition d'encollage sous la forme d'une solution aqueuse titrant environ 20% en poids. La proportion d'ammoniaque dans une composition d'encollage selon l'invention est avantageusement d'au plus 25 parties en poids de solution, notamment d'environ 18 à 20 parties en poids ou moins, pour 100 parties en poids de résine sèche. Ces teneurs en ammoniaque peuvent être considérées comme minimes, et sont d'autant moins préjudiciables à l'innocuité du produit final que le procédé de fabrication des produits isolants présente nombre d'occasions d'évaporation de l'ammoniaque à partir de l'encollage, de sorte que très peu de résidus d'ammoniaque se retrouvent finalement dans le produit.

De manière avantageuse, la résine formo-phénolique entrant dans la composition du produit isolant, respectivement de l'encollage, selon l'invention est issue de la condensation de phénol et de formaldéhyde dans un rapport molaire formaldéhyde/phénol de l'ordre de 2 à 6, en phase aqueuse en présence d'un catalyseur basique, notamment soude, potasse, chaux, baryte. Elle est liquide, avantageusement caractérisée par un taux de formaldéhyde libre de préférence inférieur ou égal à 25% (en poids par rapport au poids de la résine sèche) et un taux de phénol libre de préférence inférieur ou égal à 3% (en poids par rapport au poids de résine sèche).

L'excès de phénol par rapport au formaldéhyde permet de déplacer la réaction de condensation dans le sens de la formation de condensats phénol-formaldéhyde avec un taux de phénol libre final limité, inférieur ou égal à 3%, notamment à 2,5%, avantageusement à 1,5% ou moins.

Un taux de formaldéhyde libre faible inférieur ou égal à 20%, notamment à 15%, avantageusement à 10% peut être obtenu de diverses manières, notamment sans limiter spécialement le taux de formaldéhyde libre final dans les conditions de condensation mais en utilisant ensuite un réactif piégeur du formaldéhyde libre final, ou bien en adaptant les conditions de condensation de telle façon que le taux de formaldéhyde libre final à l'issue de l'étape de condensation soit limité.

Dans un premier mode de réalisation de l'invention, la résine formo-phénolique entrant dans la composition du produit isolant, respectivement de la composition d'encollage, comprend un résol traité avec au moins un réactif piégeur de formaldéhyde de type amine permettant une réaction du type Mannich. Dans ce cas, le résol est avantageusement obtenu par réaction de phénol et de formaldéhyde dans un rapport molaire formaldéhyde/phénol de l'ordre de 2 à 6, notamment de 2 à 5, en particulier de 2,2 à 4, à une température qui peut être comprise entre 50°C et 80°C, notamment 60 °C et 75 °C, en particulier de 70°C environ, pendant une durée pouvant aller jusqu'à 90, 150 ou même 200 minutes. Ces conditions conduisent en général à un taux de conversion du phénol d'au moins 98 %, la diluabilité du résol à 20°C à pH environ 9 étant d'au moins environ 1000%, plus généralement d'au moins environ 2000%.

L'utilisation de bisulfite en tant que piégeur de formaldéhyde dans un liant pour fibre de verre est connue de US-A-5,578,371. Néanmoins, l'enseignement de ce brevet consiste à utiliser le bisulfite comme piégeur additionnel de formaldéhyde, en mélange avec une résine phénol-formaldéhyde déjà traitée à l'urée. En effet, il est considéré dans ce document que seul un excès d'urée est susceptible de conduire à des émissions nuisibles d'ammoniaque et de " fumée bleue ". Il n'est nullement fait mention de l'apparition possible d'isocyanates.

Le sulfite ou le bisulfite peut être ajouté à la résine formo-phénolique au moment de la formulation de l'encollage.

Le piégeur est une amine apte à réagir suivant la réaction de Mannich, il s'agit avantageusement d'une alcanolamine, notamment la monoéthanolamine (MEA), la diéthanolamine (DEA), ou d'acides aminés, notamment l'acide aspartique, ou encore d'amines cycliques, telles que la pipéridine, la pipérazine, la morpholine.

Suivant la réaction de Mannich, un aldéhyde réagit avec un composé organique comprenant un atome d'hydrogène actif et une amine, pour former un produit de condensation dénommé base de Mannich. Ici, l'aldéhyde est le formaldéhyde libre de la résine, et le composé organique à hydrogène actif est le phénol libre de la résine. Les produits de condensation formaldéhyde-phénolamine sont très stables thermiquement et ne conduisent pas à la libération de formol ni de phénol.

L'application de cette réaction pour la fabrication d'un liant pour fibres minérales à base de résine formo-phénolique est connue de EP-A-480 778, mais dans ce cas encore, de l'urée est utilisée pour réduire le taux de formaldéhyde libre de la résine phénol-formol. Il n'est également pas fait mention de l'apparition possible d'isocyanates dans des conditions de température élevée.

La quantité d'amine utile selon l'invention est avantageusement de l'ordre de 0,1 à 50 parties en poids pour 100 parties en poids de résine sèche, notamment de l'ordre de 0,1 à 25 parties.

L'amine peut être ajoutée à la résine formo-phénolique pour stockage en vue de la formulation d'un encollage, ou bien être ajoutée seulement au moment de la formulation de l'encollage. Elle peut aussi être utilisée pendant la synthèse de la résine, où elle est amenée à réagir avant et/ou au cours de la réaction de condensation.

Dans un deuxième mode de réalisation particulier de l'invention, la résine formo-phénolique entrant dans la composition du produit isolant, respectivement de la composition d'encollage, selon l'invention est à base d'un résol surcondensé, ou du produit de neutralisation d'un tel résol.

Le terme " résol surcondensé" désigne ici un résol phénol-formaldéhyde caractérisé par une proportion relativement élevée de gros oligomères contenant au moins trois noyaux intercondensés, et par un poids moléculaire moyen élevé, par exemple mais de façon non limitative supérieur ou égal à 500. Ce résol est obtenu en augmentant la durée et/ou la température de réaction entre le phénol et le formaldéhyde par rapport aux résines classiques, donc le degré de condensation, de façon à assurer une conversion quasi quantitative du phénol initial en dépassant le stade de la monocondensation en monométhylolphénols. Il contient donc une proportion très faible de phénol libre et composés phénoliques volatils susceptibles de polluer l'atmosphère du site de fabrication ou d'utilisation du produit isolant. Des résols surcondensés modifiés par de l'urée sont décrits dans la demande internationale WO-A-99/03906 déposée le 9 juillet 1998 et publiée le 28 janvier 1999.

Un résol surcondensé visé dans la présente demande est obtenu par condensation en milieu basique de phénol et de formaldéhyde jusqu'à ce que le produit ait une diluabilité à l'eau à 20°C à pH 9 inférieure ou égale à 2000%, pour un mélange réactionnel dont l'extrait sec est notamment de l'ordre de 30 à 60% en poids.

L'invention peut avantageusement utiliser des résols fortement condensés, de diluabilité à 20°C à pH 9 inférieure ou égale à 1900%, notamment à 1500%, ou encore à 1000%, notamment de l'ordre de 400 à 900 %. Ces résols peuvent avoir un taux de phénol libre inférieur ou égal à 0,5%, et même de 0,3% ou moins.

Un test caractéristique des résols surcondensés, consiste à effectuer la neutralisation d'un échantillon du mélange réactionnel par de l'acide sulfurique (par neutralisation, on entend l'ajout d'une quantité de H₂SO₄ suffisante pour réagir avec tous les hydroxyles OH- introduits par le catalyseur basique). La diluabilité du mélange ainsi neutralisé devient très faible, notamment inférieure à 1000%, en particulier inférieure à 500%, voire nulle. On peut observer une précipitation dès que le pH atteint une valeur de l'ordre de 8 à 8,5.

On peut avantageusement limiter le taux de formaldéhyde dans ce cas, en choisissant un rapport molaire formaldéhyde/phénol relativement faible de l'ordre de 2 à 5, notamment de 2 à 4, en particulier 2,2 à 3,6. Le catalyseur basique connu en soi, notamment la soude, est en général utilisé en quantité correspondant à 6 à 20 mol d'équivalents hydroxyle OH pour 100 mol de phénol initial.

La surcondensation peut être obtenue avantageusement en conduisant la réaction jusqu'à l'obtention d'un taux de conversion du phénol égal ou supérieur à 98 %, de préférence à 99 %, tout particulièrement de l'ordre d'au moins 99,3 à 99,5 %. Cela correspond à pousser la réaction de condensation jusqu'à ce que le produit ait une diluabilité à l'eau à 20°C à pH 9 inférieure ou égale à 2000 %, notamment 1500 %, voire 1000 %.

Dans une première variante, on met les monomères en présence avec un catalyseur de polymérisation basique de préférence à une température comprise entre 20 et 60°C environ, et on les amène à une température de réaction comprise entre 50 et 80°C environ, de préférence à 70°C environ, jusqu'au taux de conversion désiré. Avantageusement, on maintient cette température de réaction pendant 100 à 200 minutes, de préférence de 120 à 160 minutes environ. Ce chauffage prolongé permet d'atteindre la surcondensation de la résine avec formation d'espèces de haut poids moléculaire renfermant une plus grande proportion de gros oligomères contenant trois noyaux phénoliques intercondensés et plus. On refroidit ensuite le mélange à une température de 20 à 30°C.

Dans une seconde variante, on met les monomères en présence avec un catalyseur de polymérisation basique de préférence à une température comprise entre 20 et 60°C environ, et on les amène à une première température de réaction comprise entre 50 et 80°C environ, de préférence de 70°C environ, puis on élève la température du mélange à une deuxième température de réaction comprise entre 70 et 90°C, de préférence à 85°C, jusqu'au taux de conversion désiré. Ce deuxième palier de chauffage est destiné à réaliser une surcondensation de la résine avec formation d'espèces de haut poids moléculaire renfermant une plus grande proportion de gros oligomères contenant trois noyaux phénoliques intercondensés et plus.

Avantageusement, la durée de la réaction à la première température est de 50 à 80 minutes, et la durée de la réaction à la deuxième température est de 30 à 60 minutes. On refroidit ensuite le mélange à une température de 20 à 30°C.

Le pH du résol ainsi obtenu en milieu basique est généralement de l'ordre de 8,5 à 10, notamment de 9 à 9,5. Pour terminer la réaction de condensation, afin de préserver la diluabilité de la résine, le résol peut être neutralisé.

Dans une première variante, la résine utilisée selon l'invention comprend un résol conservé à l'état non neutralisé en vue de la fabrication de l'encollage et du produit selon l'invention. En effet, comme on limite les émissions de polluants grâce à un degré de condensation le plus élevé possible, il n'y a pas un besoin absolu de désactiver rapidement le catalyseur basique. Le pH d'un tel résol est généralement de l'ordre de 8,5 à 10. Ces résols sont stables au stockage. Sur le site de fabrication on procède à l'utilisation par mélange extemporané avec les ingrédients nécessaires à la formulation de l'encollage.

Parmi ces ingrédients, on ajoutera notamment un réactif de neutralisation, car il est bien sûr toujours souhaitable pour éviter la dissociation des monomères que la résine au moment de l'application de l'encollage et/ou du passage en étuve soit sous forme neutralisée. Ce réactif de neutralisation peut être choisi avantageusement comme précédemment parmi l'acide borique ou un borate équivalent, l'acide sulfamique ou un sulfamate équivalent, un acide aminé, et un système comprenant un émulsifiant et un acide.

Dans le cas particulier où le résol formophénolique est pulvérisable à l'état non neutralisé, notamment avec une diluabilité à 20°C à pH 9 de l'ordre de 1000 à 2000% environ, voire moins mais plus généralement de 1500 à 2000 % environ, un réactif de neutralisation, non limité aux réactifs qui viennent d'être cités, peut être ajouté au stade de la pulvérisation, sous forme d'un jet de solution ou dispersion aqueuse pulvérisé au niveau de la couronne d'encollage.

En variante, le résol peut être utilisé en mélange avec un réactif neutralisant précurseur d'acide agissant de façon retardée, notamment sous activation thermique. Ainsi, par exemple, le sulfate d'ammonium ou le sulfate d'aluminium ajouté au résol à température ambiante ne modifie pas le pH de ce dernier, mais libère de l'acide sulfurique à température élevée. La quantité de sulfate d'ammonium ajoutée est déterminée de façon à apporter une quantité d'équivalents H₂SO₄ suffisante pour neutraliser le catalyseur basique contenu dans le résol.

Un réactif neutralisant précurseur d'acide susceptible d'agir de façon retardée, notamment sous activation thermique, peut également être ajouté au niveau d'une couronne de pulvérisation d'encollage, l'activation thermique pouvant par exemple avoir lieu quand la composition d'encollage est appliquée sur les filaments chauds de matière minérale ou lors du passage en étuve de la nappe.

Dans une deuxième variante, la résine utilisée selon l'invention comprend un résol surcondensé neutralisé avec de l'acide borique ou un borate équivalent (notamment borate d'ammonium, métaborate de sodium, tétraborate de sodium, polyborate d'aminoalcool...), avec de l'acide sulfamique ou un sulfamate équivalent, ou avec un acide aminé (notamment acide aspartique...), ces acides ayant la propriété de modifier le résol de telle façon que sa diluabilité est plus élevée dans le milieu neutralisé ainsi obtenu que dans le milieu obtenu avec de l'acide sulfurique. Le produit de neutralisation par l'acide borique d'un résol surcondensé a en général une diluabilité à 20°C au moins égale à 1000 %, très souvent de l'ordre de 2000 % ou plus. La neutralisation se fait avantageusement jusqu'à obtention d'une composition résinique sensiblement neutre, avec un pH de l'ordre de 7 à 8.

La neutralisation du résol peut toutefois être effectuée avec de l'acide borique en solution alcaline, notamment ammoniacal, la composition résinique étant alors basique, avec un pH par exemple de l'ordre de 8 à 10, notamment de 8,5 à 10. Le résol fortement condensé modifié par l'acide borique est stable en milieu basique.

Dans une autre variante, le résol surcondensé est neutralisé avec un acide quelconque mais renferme également un émulsifiant tel qu'une gomme et/ou un tensioactif anionique, notamment les gommes guar et ghatti, ou éventuellement de la caséine. De préférence, le produit de neutralisation du résol est obtenu en présence de l'émulsifiant. Ce dernier peut être utilisé à raison de 1 à 10 parties en poids d'émulsifiant pour 100 parties en poids de matière sèche dans le résol. L'acide utilisé peut être choisi parmi tous les acides forts connus en soi tels que l'acide sulfurique, l'acide chlorhydrique, mais aussi l'acide borique, l'acide sulfamique ou un sulfamate. La neutralisation se fait avantageusement jusqu'à obtention d'une émulsion ayant un pH de l'ordre de 7 à 8, notamment 7,2 à 7,6.

Les variantes exposées ci-dessus ne s'excluent pas l'une l'autre, et il est tout à fait possible de les combiner en utilisant par exemple une résine surcondensée traitée avec un bisulfite ou avec une amine apte à la réaction de Mannich.

Outre la résine décrite précédemment, la composition d'encollage entrant dans la fabrication du produit isolant selon l'invention peut comprendre les additifs usuels, à savoir, pour 100 parties en poids de matière sèche de résine :
- sulfate d'ammonium 0 à 5, notamment de l'ordre de 2 à 3
- silane, notamment aminosilane 0 à 2
- huile minérale 0 à 20
- ammoniaque en solution aqueuse à 20% 0 à 25, notamment 0 à 20, ou 0 à 18

Le sulfate d'ammonium n'intervient généralement pas en tant que source d'isocyanates, en raison de l'évaporation d'ammoniac lors du passage en étuve du produit fraîchement encollé.

L'ammoniaque utilisé dans les quantités spécifiées ci-dessus n'intervient généralement pas ou peu en tant que source d'isocyanates. Les émissions éventuelles sont rendues très faibles en raison d'une évaporation au moins partielle de l'ammoniac en étuve.

Les produits isolants selon l'invention renferment avantageusement de l'ordre de 2 à 20 % en poids de matière sèche issue de l'encollage, notamment de 3 à 10 %, de préférence de l'ordre de 4 à 8%.

Ils peuvent se présenter sous toutes les formes usuelles, à savoir notamment matelas ou feutre roulé, panneau rigide ou non, feutre, en particulier feutre ou panneau destiné à équiper un appareil thermique de série tel qu'une cuisinière. La densité de ces produits peut varier de l'ordre de 10 à 80 kg/m³.

De manière générale, on peut vérifier le faible taux d'émission d'isocyanates par un produit selon l'invention, en mesurant la quantité d'isocyanate de méthyle dégagée lorsque le produit est chauffé à une température d'environ 350°C pendant 20 minutes. Elle est généralement inférieure ou égale à 150 mg d'isocyanate de méthyle par kg de produit isolant.

L'invention a également pour objet l'utilisation du produit isolant, notamment thermique ou phonique, à base de laine minérale, notamment laine de verre ou laine de roche, dans le but de réduire les émissions d'isocyanates par le produit.

Les conditions de mise en oeuvre d'un tel encollage sont les conditions habituelles dans la fabrication du produit isolant considéré; elles utilisent notamment une technique de pulvérisation sur la laine minérale.

D'autres avantages et particularités de l'invention ressortiront des exemples suivants, non limitatifs.

### ESSAIS PRELIMINAIRES

Cet essai vise à mettre en évidence le rôle de différents composés azotés en tant que source d'isocyanates. Les composés testés sont: l'urée, l'ammoniaque, la diéthanolamine, le sulfate d'ammonium, qui sont des ingrédients employés dans l'art antérieur pour la formulation d'encollages pour produits isolants.

Des compositions d'encollage ont été préparées à partir de résine formophénolique selon les formules suivantes, indiquées au Tableau 1. La résine est la même pour les échantillons **A** à **D** et **F** à **H**, la résine de l'échantillon **E** ne s'en distingue que par un traitement à la diéthanolamine.

Ces compositions d'encollage ont été pulvérisées sur des échantillons identiques de laine minérale, la quantité pulvérisée étant la même pour tous les échantillons.

Un prélèvement de 1 gramme de chaque échantillon a été chauffé durant 20 minutes dans un four tubulaire à 350°C avec un débit d'air de 2 l/min. On mesure la quantité d'isocyanate de méthyle (MIC) véhiculée par l'air en sortie du four conformément à la norme OSHA n° 54 (piégeage du MIC sur un piège solide imprégné d'un réactif captant le MIC, puis dans un barboteur de garde contenant le même réactif, et enfin dosage par HPLC à détection à fluorescence UV)

Ce test, volontairement très sévère, ne reflète pas les dégagements effectivement susceptibles de se produire dans des conditions normales d'utilisation, lesquels ont fort heureusement bien inférieurs, mais procure une démonstration très nette des différences d'émission d'isocyanate par les composés testés.

Compte tenu de la valeur mesurée pour l'échantillon de contrôle **A** sans aucun composé azoté et de l'incertitude de mesure de la méthode employée, on conclut des observations précédentes que le sulfate d'ammonium et la diéthanolamine ne sont pas à considérer comme source d'isocyanate et que l'ammoniaque peut être source d'une émission minime d'isocyanate.

On constate qu'à quantité sensiblement égale de composé azoté introduit dans la formule, l'urée de l'échantillon **F** génère environ 3 fois plus que l'ammoniaque de l'échantillon **D** (en supposant que l'émission propre à NH₃ est de 6 mg/kg, puisque l'émission due au sulfate d'ammonium est mesurée à 5 mg/kg dans l'échantillon **B**).

**Tableau 1**

| Echantillon | Encollage | | | | Emission de MIC (mg/kg) |
|---|---|---|---|---|---|
| | Proportions en parties en poids de matière sèche | | | | |
| | Résine | Urée | Catalyseur | Ammoniaque | |
| **A** | 100 | 0 | 0 | 0 | 3 |
| **B** | 100 | 0 | (NH₄)₂SO₄ :3 | 0 | 5 |
| **C** | 100 | 0 | H₃BO₃ | 0 | 4 |
| **D** | 100 | 0 | (NH₄)₂SO₄ :3 | 6 | 11 |
| **E** | 100 dont DEA 6,8 | 0 | 0 | 0 | |
| **F** | 95 | 5 | 0 | 0 | 18 |
| **G** | 90 | 10 | 0 | 0 | 24 |
| **H** | 85 | 15 | 0 | 0 | 80 |

La quantité d'isocyanate émis croit directement avec la proportion d'urée dans l'encollage.

La suppression d'urée dans l'encollage permet donc de réduire les émissions d'isocyanate de méthyle à un niveau très faible garantissant l'innocuité du produit à l'égard des isocyanates.

On peut également mettre en évidence l'influence de l'urée dans l'émission de polluants lors de la mise en oeuvre de l'encollage au cours de la fabrication du produit, au moyen de l'essai de laboratoire suivant. On prépare une composition d'encollage **I** avec des proportions usuelles, à savoir 55 parties en poids de la résine utilisée précédemment, pour 45 parties en poids d'urée, et on compare son caractère polluant avec celui de la composition **D**.

Le test représentatif qui détermine le caractère polluant de l'encollage consiste à
- peser dans un flacon erlenmeyer de 1 litre 3,76 g de l'encollage dilué à 26,6 % d'extrait sec, de manière à napper le fond du récipient ;
- placer cet erlenmeyer dans une étuve ventilée réglée à 180°C ;
- récupérer pendant 1 heure dans des barboteurs les gaz émis (phénol, formaldéhyde, ammoniac), qui sont ensuite analysés.

Les résultats des analyses, exprimés en g de gaz émis par kg d'encollage, sont rassemblés dans le Tableau 2 suivant.

Ici encore, les quantités émises ne reflètent pas les émissions réelles sur une ligne de fabrication de produits isolants, mais doivent être lues afin de comparer les comportements des compositions testées.

**Tableau 2**

| Essai | Encollage Proportions en parties en poids de matière sèche | | | | Emission de polluants (g/kg d'encollage) | | |
|---|---|---|---|---|---|---|---|
| | Résine | Urée | Sulfate d'ammonium | Ammoniaque | Phénol | Formaldéhyde | Ammoniac |
| **D** | 100 | 0 | 3 | 6 | 14,0 | 97,3 | 2 |
| **I** | 55 | 45 | 3 | 6 | 7,7 | 3,3 | 34,8 |

La comparaison des émissions de polluants rencontrées avec ces deux compositions d'encollage montre très clairement que la présence d'urée est source d'une émission importante d'ammoniac, qui est déjà une gêne sur la ligne de fabrication, laissant en outre augurer la formation d'autres dérivés azotés à partir du produit final à plus haute température,

L'augmentation de la quantité de phénol émise entre les compositions **D** et **I** résulte directement du fait que la quantité de résine est doublée et est donc tout à fait normale. Cela intervient aussi dans le cas du formaldéhyde ; la suppression de l'urée est quelque peu problématique pour ce composé puisque la composition **D** est privée de piégeur de formaldéhyde. Des solutions à ce problème vont être présentées dans les exemples ci-dessous.

### EXEMPLE COMPARATIF

Cet exemple illustre la fabrication d'un produit isolant selon l'art antérieur avec une résine formo-phénolique modifiée à l'urée.

### a) Préparation de la résine

Dans un réacteur agité et chauffé à 45°C, on introduit du phénol et du formaldéhyde (solution aqueuse à 37 % en poids) dans un rapport moléculaire formaldéhyde/phénol = 3,35. Tout en maintenant la température, on ajoute par fractions, de l'hydroxyde de sodium en tant que catalyseur avec un rapport molaire NaOH/phénol de 5%.

A la fin de l'addition de la soude, on augmente la température du mélange à 70°C en 30 minutes et on maintient l'agitation à cette température durant 80 minutes.

Puis on refroidit le mélange; lorsque la température du mélange réactionnel atteint 25°C environ, on ajoute de l'acide sulfurique en solution à 20 % de manière à atteindre un pH de 7,2 environ.

La résine ainsi obtenue se caractérise par un extrait sec de 37 % environ , un taux de phénol libre de 0,5 % et un taux de formaldéhyde libre de 6,6 % par rapport au poids de résine liquide. Ce taux est réduit grâce à l'utilisation d'urée en tant que piégeur de formaldéhyde lors de la formulation de l'encollage.

### b) Formulation de l'encollage

La composition est la suivante (en parties en poids de matière sèche) :
- résine 55
- urée 45
- sulfate d'ammonium 2 à 3
- huile minérale 0 à 20
- silane 0,5 à 2
- ammoniaque 6 en solution aqueuse à 20%

### c) Fabrication d'un produit isolant

A la sortie d'un dispositif de fabrication de laine minérale par étirage centrifuge connu, on pulvérise sur de la laine de verre entre le dispositif centrifuge et l'organe de réception, la composition d'encollage décrite précédemment à raison d'environ 7 % de matière solide par rapport au poids de verre.

Après réception de la laine encollée sur l'organe de réception, on forme un matelas qui passe ensuite en étuve à une température entre 180 et 200 °C, pour réticuler la résine formo-phénolique.

Un matelas de verre ainsi fabriqué avec une densité d'environ 20 kg/m³ et une épaisseur d'environ 30 mm est adapté à équiper un appareil thermique de série tel qu'une cuisinière.

On mesure les émissions de polluants cumulées tout le long de la ligne de fabrication, en particulier au niveau du dispositif de réception de la laine encollée et au niveau de l'étuve, en prélevant des fractions des atmosphères correspondantes au moyen de barboteurs. La teneur en phénol de la fraction prélevée est mesurée par chromatographie en phase gazeuse ; la teneur en phénol total (tous dérivés phénoliques volatils), en formaldéhyde et en ammoniaque est mesurée par colorimétrie ; et la teneur en composés organiques volatils est mesurée au moyen d'un COTmètre.

On prélève également un échantillon de produit que l'on soumet au même traitement thermique que dans les essais préliminaires avec mesure de la quantité d'isocyanate de méthyle dégagée par le produit. Le résultat est exprimé en mg d'isocyanate de méthyle par kg du produit isolant.

### EXEMPLE 1

Cet exemple illustre la fabrication d'un produit isolant avec une première résine formo-phénolique sans urée.

### a) Préparation de la résine

On prépare une résine phénol-formaldéhyde en faisant réagir dans un réacteur agité du phénol et du formaldéhyde dans un rapport molaire formaldéhyde/phénol de l'ordre de 2,5 , en présence de soude en tant que catalyseur

Dans un réacteur agité et chauffé à 45°C, on introduit du phénol et du formaldéhyde (solution aqueuse à 37 % en poids) dans un rapport moléculaire formaldéhyde/phénol = 2,5.

Tout en maintenant la température, on ajoute par fractions, de l'hydroxyde de sodium en tant que catalyseur avec un rapport molaire NaOH/phénol de 5%.

A la fin de l'addition de la soude, on augmente la température du mélange à 70°C en 30 minutes et on maintient l'agitation à cette température durant 80 minutes.

On commence alors à refroidir régulièrement le mélange; on ajoute progressivement pendant les 30 premières minutes de la diéthanolamine en une quantité totale correspondant à un rapport de 32,6 % en poids par rapport au poids de phénol. A la fin de l'addition de l'amine, la température est de 60°C environ; elle reste environ à cette valeur pendant une quinzaine de minutes, la réaction étant exothermique.

Puis on refroidit le mélange; lorsque la température du mélange réactionnel atteint 25°C environ, on ajoute de l'acide sulfurique en solution à 25 % de manière à atteindre un pH de 7,2 environ.

La résine ainsi obtenue se caractérise par un extrait sec de 43,6 % , un taux de phénol libre de 0,47 % et un taux de formaldéhyde libre de 1,76 % par rapport au poids de résine liquide. Ce taux sera réduit grâce à l'utilisation de bisulfite d'ammonium en tant que piégeur de formaldéhyde lors de la formulation de l'encollage.

### b) Formulation de l'encollage

La composition est la suivante (en parties en poids de matière sèche) :
- résine 100
- bisulfite d'ammonium 5
- sulfate d'ammonium 2 à 3
- huile minérale 0 à 20
- silane 0,5 à 2
- ammoniaque 6 en solution aqueuse à 20%
- urée 0

c) Cet encollage est utilisé pour la fabrication d'un produit isolant de la même façon qu'à l'exemple comparatif ci-dessus, et l'on procède aux mêmes mesures d'émission de polluants. Les résultats cumulés des mesures à chaque point de la ligne, exprimés en kg de polluant par tonne de verre, sont consignés dans le Tableau 3 ci-après.

Les modifications apportées à la composition d'encollage ne nuisent pas à l'emploi du produit dans un appareil thermique de série.

Ces résultats montrent que par rapport à un produit classique, les émissions en fabrication sont un peu plus élevées pour le phénol total mais sont considérablement réduites pour les autres composés organiques, à savoir formaldéhyde et ammoniac. Et surtout, ce produit selon l'invention émet plus de 30 fois moins d'isocyanate de méthyle qu'un produit classique, le taux d'émission étant suffisamment faible pour garantir la sécurité des utilisateurs du produit.

### EXEMPLE 2

Cet exemple illustre la fabrication d'un produit isolant avec une deuxième résine formo-phénolique sans urée.

### a) Préparation de la résine

On prépare comme à l'exemple 1 une résine phénol-formaldéhyde en faisant cette fois réagir du phénol et du formaldéhyde dans un rapport molaire formaldéhyde/phénol de l'ordre de 2,8 , en présence de soude catalytique avec un rapport molaire NaOH/phénol de 6%.

A la fin de l'addition de la soude, on augmente la température du mélange à 70°C en 30 minutes et on maintient l'agitation à cette température durant 120 minutes.

Puis on refroidit le mélange; lorsque la température du mélange réactionnel atteint 25°C environ, on ajoute de l'acide sulfamique de manière à atteindre un pH de 7,2 environ.

La résine ainsi obtenue se caractérise par un extrait sec de 37,2 % , un taux de phénol libre de 0,7 % et un taux de formaldéhyde libre de 2,6 % par rapport au poids de résine liquide. Ce taux sera réduit grâce à l'utilisation de bisulfite d'ammonium en tant que piégeur de formaldéhyde lors de la formulation de l'encollage.

### b) Formulation de l'encollage

La composition est la suivante (en parties en poids de matière sèche) :
- résine 100
- bisulfite d'ammonium 5
- sulfate d'ammonium 2 à 3
- huile minérale 0 à 20
- silane 0,5 à 2
- ammoniaque 18 en solution aqueuse à 20%
- urée 0

c) Cet encollage est utilisé pour la fabrication d'un produit isolant de la même façon qu'à l'exemple comparatif ci-dessus, et l'on procède aux mêmes mesures d'émission de polluants. Les résultats, exprimés en kg de polluant par tonne de verre, sont consignés dans le Tableau 3 ci-après.

Ces résultats montrent que par rapport à un produit classique, les émissions de phénol total en fabrication sont du même ordre, alors que les émissions en fabrication sont considérablement réduites pour le formaldéhyde et l'ammoniac. Comme le précédent, ce produit selon l'invention émet notablement moins d'isocyanate de méthyle qu'un produit classique, le taux d'émission étant encore suffisamment faible pour garantir la sécurité des utilisateurs du produit.

Les modifications apportées à la composition d'encollage ne nuisent pas à l'emploi du produit dans un appareil thermique de série.

### EXEMPLE 3

Cet exemple est similaire à l'exemple 2, à la seule différence près que l'encollage est appliqué sur la laine de verre à raison d'environ 5 % en poids par rapport au poids de verre. En abaissant ainsi légèrement la quantité de liant dans le produit, on abaisse très nettement les émissions de polluants et le produit isolant reste tout à fait adapté à l'emploi en appareil thermique de série; en particulier ses propriétés mécaniques sont peu affectées.

**Tableau 3**

| | Emissions sur ligne | | | Emission par le produit |
|---|---|---|---|---|
| Exemple | Phénol total | Formaldéhyde | Ammoniac | MIC |
| | (kg/t de verre) | (kg/t de verre) | (kg/t de verre) | (mg/kg) |
| Comparatif 1 | 2,2 | 2,4 | 3,4 | 881 |
| 1 | 3,1 | 0,9 | 1,7 | < 30 |
| 2 | 2,5 | 0,6 | 2,1 | < 117 |
| 3 | 1,7 | 0,5 | 1,4 | n.d. |

## Revendications

1. Procédé pour réduire les émissions d'isocyanates venant d'un produit isolant à base de laine minérale, notamment laine de verre ou laine de roche, renfermant un encollage à base de résine formo-phénolique, **caractérisé en ce que** l'on fabrique le produit isolant avec un encollage sensiblement exempt d'urée ou de dérivé d'urée dont la résine formo-phénolique comprend un résol traité avec au moins un réactif piégeur de formaldéhyde choisi parmi une alcanolamine, un acide aminé ou une amine cyclique.

2. Procédé selon la revendication 1, **caractérisé en ce que** le produit isolant comprend au plus 0,004% en poids d'urée.

3. Procédé selon la revendication 1 ou 2, **caractérisé en ce que** le produit isolant comprend au plus 0,2% en poids d'ammoniaque.

4. Procédé selon la revendication 3, **caractérisé en ce que** l'encollage est sensiblement exempt d'ammoniaque.

5. Procédé selon l'une des revendications 1 à 4, **caractérisé en ce que** le résol est issu de la condensation de formaldéhyde et de phénol dans un rapport molaire formaldéhyde/phénol de l'ordre de 2 à 6, notamment de 2,2 à 4.

6. Procédé selon l'une des revendications 1 à 5, **caractérisé en ce que** l'alcanolamine est la monoéthanolamine ou la diéthanolamine.

7. Procédé selon l'une des revendications 1 à 5, **caractérisé en ce que** l'acide aminé est l'acide aspartique.

8. Procédé selon l'une des revendications 1 à 5, **caractérisé en ce que** l'amine cyclique est la pipéridine, la pipérazine ou la morpholine.

9. Procédé selon l'une des revendications 1 à 8, **caractérisé en ce que** l'on utilise une composition d'encollage qui renferme au plus 0,1 partie en poids d'urée ou de dérivé d'urée pour 100 parties en poids de résine sèche.

10. Procédé selon l'une des revendications 1 à 9, **caractérisé en ce que** l'on utilise une composition d'encollage qui comprend au plus 25 parties en poids d'ammoniaque en solution aqueuse à 20% pour 100 parties en poids de résine sèche.

11. Procédé pour réduire les émissions d'isocyanates venant d'un produit isolant à base de laine minérale, notamment laine de verre ou laine de roche, renfermant un encollage à base de résine formo-phénolique, **caractérisé en ce que** l'on fabrique le produit isolant avec un encollage sensiblement exempt d'urée ou de dérivé d'urée dont la résine formo-phénolique comprend un résol surcondensé, ou le produit de neutralisation d'un tel résol notamment par l'acide borique, l'acide sulfamique ou l'acide aspartique.

12. Procédé selon la revendication 11, **caractérisé en ce que** le produit isolant comprend au plus 0,004% en poids d'urée.

13. Procédé selon la revendication 11 ou 12, **caractérisé en ce que le** produit isolant comprend au plus 0,2% en poids d'ammoniaque.

14. Procédé selon la revendication 13, **caractérisé en ce que** l'encollage est sensiblement exempt d'ammoniaque.

15. Procédé selon l'une des revendications 11 à 14, **caractérisé en ce que** le résol surcondensé est issu de la condensation de formaldéhyde et de phénol dans un rapport molaire formaldéhyde/phénol de l'ordre de 2 à 5, notamment de 2 à 4, en particulier de 2,2 à 3,6.

16. Procédé selon l'une des revendications 11 à 15, **caractérisé en ce que** le résol surcondensé est traité avec au moins un réactif piégeur de formaldéhyde choisi parmi :
- un sulfite ou un bisulfite hydrosoluble, et
- une amine permettant une réaction du type Mannich.

17. Procédé selon la revendication 16, **caractérisé en ce que** le réactif piégeur de formaldéhyde est choisi parmi
- un sulfite ou un bisulfite de métal alcalin ou alcalino-terreux, un sulfite ou un bisulfite d'ammonium, ou encore un précurseur de bisulfite, tel que méta-bisulfite ou un mélange de sulfite et d'agent acidifiant ;
- une alcanolamine, notamment monoéthanolamine ou diéthanolamine, un acide aminé, notamment acide aspartique, ou une amine cyclique, telle que pipéridine, pipérazine, morpholine.

18. Procédé selon l'une des revendications 11 à 17, **caractérisé en ce que** l'on utilise une composition d'encollage qui renferme au plus 0,1 partie en poids d'urée ou de dérivé d'urée pour 100 parties en poids de résine sèche.

19. Procédé selon l'une des revendications 11 à 18, **caractérisé en ce que** l'on utilise une composition d'encollage qui comprend au plus 25 parties en poids d'ammoniaque en solution aqueuse à 20% pour 100 parties en poids de résine sèche.

20. Utilisation du produit isolant obtenu par le procédé selon l'une des revendications 1 à 10 ou 11 à 19 pour former un feutre isolant pour appareil thermique de série.

## Claims

1. Process for reducing isocyanate emissions coming from an insulating product based on mineral wool, especially glass wool or rock wool, incorporating a size based on phenol-formaldehyde resin, **characterized in that** the insulating product is manufactured with a size substantially free of urea or of urea derivatives, the phenol-formaldehyde resin of which comprises a resol treated with at least one formaldehyde-trapping reagent chosen from an alkanolamine, an amino acid or a cyclic amine.

2. Process according to Claim 1, **characterized in that** the insulating product comprises at most 0.004% by weight of urea.

3. Process according to Claim 1 or 2, **characterized in that** the insulating product comprises at most 0.2% by weight of aqueous ammonia.

4. Process according to Claim 3, **characterized in that** the size is substantially free of aqueous ammonia.

5. Process according to one of Claims 1 to 4, **characterized in that** the resol is derived from the condensation of formaldehyde and phenol in a formaldehyde/phenol molar ratio of around 2 to 6, especially from 2.2 to 4.

6. Process according to one of Claims 1 to 5, **characterized in that** the alkanolamine is monoethanolamine or diethanolamine.

7. Process according to one of Claims 1 to 5, **characterized in that** the amino acid is aspartic acid.

8. Process according to one of Claims 1 to 5, **characterized in that** the cyclic amine is piperidine, piperazine or morpholine.

9. Process according to one of Claims 1 to 8, **characterized in that** a sizing composition is used which incorporates at most 0.1 part by weight of urea or of urea derivatives per 100 parts by weight of dry resin.

10. Process according to one of Claims 1 to 9, **characterized in that** a sizing composition is used which comprises at most 25 parts by weight of 20% aqueous ammonia solution per 100 parts by weight of dry resin.

11. Process for reducing isocyanate emissions coming from an insulating product based on mineral wool, especially glass wool or rock wool, incorporating a size based on phenol-formaldehyde resin, **characterized in that** the insulating product is manufactured with a size substantially free of urea or of urea derivatives, the phenol-formaldehyde resin of which comprises an overcondensed resol, or the product of neutralizing such a resol, especially with boric acid, sulphamic acid or aspartic acid.

12. Process according to Claim 11, **characterized in that** the insulating product comprises at most 0.004% by weight of urea.

13. Process according to Claim 11 or 12, **characterized in that** the insulating product comprises at most 0.2% by weight of aqueous ammonia.

14. Process according to Claim 13, **characterized in that** the size is substantially free of aqueous ammonia.

15. Process according to one of Claims 11 to 14, **characterized in that** the overcondensed resol is derived from the condensation of formaldehyde and phenol in a formaldehyde/phenol molar ratio of around 2 to 5, especially from 2 to 4, in particular from 2.2 to 3.6.

16. Process according to one of Claims 11 to 15, **characterized in that** the overcondensed resol is treated with at least one formaldehyde-trapping reagent chosen from:
- a water-soluble sulphite or bisulphite; and
- an amine that allows a Mannich-type reaction.

17. Process according to Claim 16, **characterized in that** the formaldehyde-trapping reagent is chosen from:
- an alkali or alkaline-earth metal sulphite or bisulphite, an ammonium sulphite or bisulphite, or else a bisulphite precursor, such as metabisulphite or a mixture of sulphite and acidifying agent; and
- an alkanolamine, especially monoethanolamine or diethanolamine, an amino acid, especially aspartic acid, or a cyclic amine, such as piperidine, piperazine or morpholine.

18. Process according to one of Claims 11 to 17, **characterized in that** a sizing composition is used which incorporates at most 0.1 part by weight of urea or of urea derivatives per 100 parts by weight of dry resin.

19. Process according to one of Claims 11 to 18, **characterized in that** a sizing composition is used which comprises at most 25 parts by weight of 20% aqueous ammonia solution per 100 parts by weight of dry resin.

20. Use of the insulating product obtained by the process according to one of Claims 1 to 10 or 11 to 19 to form an insulating felt for a mass-produced thermal appliance.

## Patentansprüche

1. Verfahren zum Verringern der Abgabe von Isocyanaten aus einem Dämmprodukt auf der Basis von Mineralwolle, insbesondere Glas- oder Steinwolle, welches ein Bindemittel auf der Basis von Formaldehyd-Phenolharz beinhaltet, **dadurch gekennzeichnet, daß** das Dämmprodukt mit einem Bindemittel hergestellt wird, das im wesentlichen frei von Harnstoff oder Harnstoffderivaten ist, wobei das Formaldehyd-Phenolharz ein Resol beinhaltet, das mit mindestens einem Formaldehydfänger-Reagens behandelt wurde, welches ausgewählt wird aus einem Alkanolamin, einer Aminosäure oder einem zyklischen Amin.

2. Verfahren nach Anspruch 1, **dadurch gekennzeichnet, daß** das Dämmprodukt höchstens 0,004 Gew.-% Harnstoff aufweist.

3. Verfahren nach Anspruch 1 oder 2, **dadurch gekennzeichnet, daß** das Dämmprodukt höchstens 0,2 Gew.-% Ammoniak aufweist.

4. Verfahren nach Anspruch 3, **dadurch gekennzeichnet, daß** das Bindemittel im wesentlichen frei von Ammoniak ist.

5. Verfahren nach einem der Ansprüche 1 bis 4, **dadurch gekennzeichnet, daß** das Formaldehyd-Phenolharz aus der Kondensation von Phenol und Formaldehyd in einem Molverhältnis von Formaldehyd/Phenol in der Größenordnung von 2 bis 6, insbesondere 2,2 bis 4 stammt .

6. Verfahren nach einem der Ansprüche 1 bis 5, **dadurch gekennzeichnet, daß** das Alkanolamin Monoethanolamin oder Diethanolamin ist.

7. Verfahren nach einem der Ansprüche 1 bis 5, **dadurch gekennzeichnet, daß** die Aminosäure Asparaginsäure ist.

8. Verfahren nach einem der Ansprüche 1 bis 5, **dadurch gekennzeichnet, daß** das zyklische Amin Piperidin, Piperazin oder Morpholin ist.

9. Verfahren nach einem der Ansprüche 1 bis 8, **dadurch gekennzeichnet, daß** eine Bindemittelzusammensetzung verwendet wird, die höchstens 0,1 Gewichtsteile Harnstoff oder Harnstoffderivate auf 100 Gewichtsteile trockenes Harz beinhaltet.

10. Verfahren nach einem der Ansprüche 1 bis 9, **dadurch gekennzeichnet, daß** eine Bindemittelzusammensetzung verwendet wird, die höchstens 25 Gewichtsteile Ammoniak in 20%-iger wäßriger Lösung auf 100 Gewichtsteile trockenes Harz beinhaltet.

11. Verfahren zum Verringern der Abgabe von Isocyanaten aus einem Dämmprodukt auf der Basis von Mineralwolle, insbesondere Glas- oder Steinwolle, welches ein Bindemittel auf der Basis von Formaldehyd-Phenolharz beinhaltet, **dadurch gekennzeichnet, daß** das Dämmprodukt mit einem Bindemittel hergestellt wird, das im wesentlichen frei von Harnstoff oder Harnstoffderivaten ist, wobei das Formaldehyd-Phenolharz ein aufkondesiertes Resol oder das Neutralisationsprodukt eines solchen Resols, insbesondere mit Borsäure, Sulfaminsäure oder Asaparaginsäure, beinhaltet.

12. Verfahren nach Anspruch 11, **dadurch gekennzeichnet, daß** das Dämmprodukt höchstens 0,004 Gew.-% Harnstoff aufweist.

13. Verfahren nach Anspruch 11 oder 12, **dadurch gekennzeichnet, daß** das Dämmprodukt höchstens 0,2 Gew.-% Ammoniak aufweist.

14. Verfahren nach Anspruch 13, **dadurch gekennzeichnet, daß** das Bindemittel im wesentlichen frei von Ammoniak ist.

15. Verfahren nach einem der Ansprüche 11 bis 14, **dadurch gekennzeichnet, daß** das aufkondensierte Resol aus der Kondensation von Phenol und Formaldehyd in einem Molverhältnis von Formaldehyd/Phenol in der Größenordnung von 2 bis 5, insbesondere 2 bis 4, vorzugsweise 2,2 bis 3,6, stammt.

16. Verfahren nach einem der Ansprüche 11 bis 15, **dadurch gekennzeichnet, daß** das aufkondensierte Resol mit mindestens einem Formaldehydfänger-Reagens behandelt wurde, welches ausgewählt ist aus:
- einem wasserlöslichen Sulfit oder Bisulfit, und
- einem Amin, das eine Reaktion vom Mannich-Typ gestattet.

17. Verfahren nach Anspruch 16, **dadurch gekennzeichnet, daß** das Formaldehydfänger-Reagens ausgewählt wird aus:
- einem Sulfit oder Bisulfit eines Alkali- oder Erdalkalimetalls, einem Ammoniumsulfit oder
- bisulfit, oder auch einem Bisulfit-Vorläufermaterial wie Meta-Bisulfit oder einer Mischung aus Sulfit und Säuerungsmittel;
- einem Alkanolamin, insbesondere Monoethanolamin oder Diethanolamin, einer Aminosäure, insbesondere Asparaginsäure oder einem cyclischen Amin wie Piperidin, Piperazin, Morpholin.

18. Verfahren nach einem der Ansprüche 11 bis 17, **dadurch gekennzeichnet, daß** eine Bindemittelzusammensetzung verwendet wird, die höchstens 0,1 Gewichtsteile Harnstoff oder Harnstoffderivate auf 100 Gewichtsteile trockenes Harz beinhaltet.

19. Verfahren nach einem der Ansprüche 11 bis 18, **dadurch gekennzeichnet, daß** eine Bindemittelzusammensetzung verwendet wird, die höchstens 25 Gewichtsteile Ammoniak in 20%-iger wäßriger Lösung auf 100 Gewichtsteile trockenes Harz beinhaltet.

20. Verwendung eines durch das Verfahren nach einem der Ansprüche 1 bis 10 oder 11 bis 19 hergestellten Dämmproduktes zum Bilden eines Dämmfilzes für seriengefertigte wärmetechnische Geräte.
